# EUROPEAN PATENT APPLICATION

(11) **EP 1 519 206 A2**
(43) Date of publication of application: **30.03.2005**
(21) Application number: 04255754.6
(22) Date of filing: 22.09.2004
(51) Int. Cl.: G02B 5/28

(54) **Joined multi functional optical device**

(30) Priority: 25.09.2003 US 671846
(71) Applicant: GENERAL ELECTRIC COMPANY, Schenectady, NY 12345 (US)
(72) Inventor: Olczak, Eugene George, Glenville, New York 12302 (US); Coyle, Dennis Joseph, Cilfton Park, New York 12065 (US); Liang, Erwin Wenti, Ballston Lake, New York 12019 (US); Tang, Shu-Guo, Clifton Park, New York 12065 (US)
(74) Representative: Pedder, James Cuthbert

(57) **Abstract**

An optical device comprises multiple substrates with complimentary functions. The substrates are joined by structures which are integrated into the substrate surfaces. The joining structures are alternatively used to provide a spacer between the optical surface and other system components.

## Description

This invention relates to optical devices and optical structures comprising multiple film layers. More particularly the invention relates to the joining of multiple optical films using joining structures that are integrated into the component film surfaces. The joining structures may be used to separate portions of adjacent layers of the component optical films.

Optical devices comprising multiple film layers are used in applications that require a stacking of multiple, substantially planar, optical films, (e.g. liquid crystal display (LCD) backlighting). Due to their stacked structures, such optical devices comprising multiple film layers are limited by the complexity of their assembly, are dimensionally unstable, and the individual film components are susceptible to abrasion. Moreover, the manufacture of such optical devices requires the handling of fragile individual component films and an overall high number of individual parts.

Stacked optical devices, diffusers, brightness enhancement films, and polarization recycling films have been used in the assembly of LCD backlighting devices.

Increasing the rigidity of stacked multilayer optical films and reducing part count in the manufacture of devices comprising such multilayer optical films is a an attractive goal. A major limitation has been the number of substrates that may be stacked without lateral displacement of the component films relative to each other and the film abrasion resulting therefrom. It would be desirable therefore to provide large, complex, stacked multilayer optical films which minimize the part count of the device comprising said film, provide increased rigidity relative to known multicomponent films, and possess a reduced tendency of the individual component films of the stacked film structure toward lateral displacement relative to each other.

In one aspect, the present invention provides a multilayer optical film, said film comprising at least two component films, at least one of said component films having an upper and lower surface, said upper surface comprising a series of optical structures and a plurality of raised spacing structures, said lower surface being essentially planar, said component films being joined so as to constitute a single film structure comprising at least one gap disposed between said component films.

In another aspect, the present invention relates to a method for making such multilayer optical films.

The invention will now be described in greater detail, by way of example, with reference to the drawings, in which:-
Figure 1 is a schematic view illustrating one embodiment of the component films and a joined multifunctional optical assembly of such films;
Figure 2 is a schematic view illustrating another embodiment of structured component film showing raised spacing structures and an open cell (or gap) between spacing structures;
Figure 3 is a schematic view illustrating a third embodiment of a structured component film showing the raised spacing structure (post structures);
Figure 4 is a schematic view illustrating a fourth embodiment of a joined multifunctional optical film assembly from its constituent component films showing the joined structures as well as optical textures with the component films (including plano).

The present invention may be understood more readily by reference to the following detailed description of preferred embodiments of the invention and the examples included herein. In this specification and in the claims which follow, reference will be made to a number of terms which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

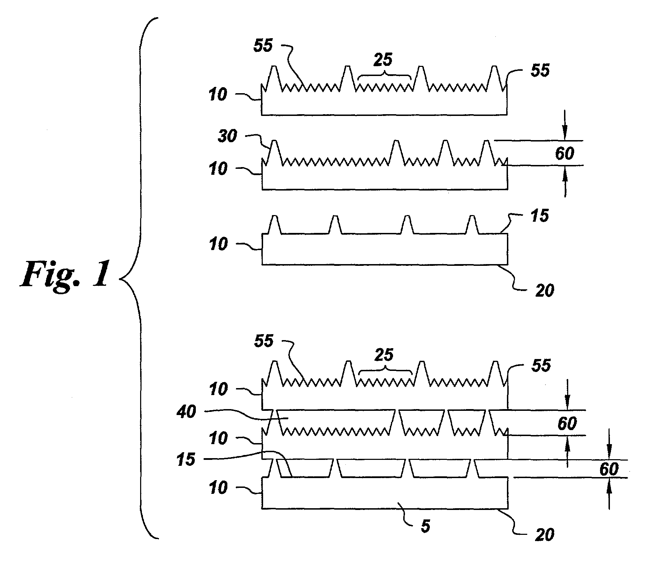

As mentioned, the present invention provides a multilayer optical film, said film comprising at least two component films, at least one of said component films having an upper and lower surface, said upper surface comprising a series of optical structures and a plurality of raised spacing structures, said lower surface being essentially planar, said component films being joined so as to constitute a single film structure comprising at least one gap disposed between said component films. The invention works by building joining structures into the component optical films themselves (See Figure 1). These joining structures take form of raised spacing structures which form part of the component optical films. The raised spacing structures act to separate portions of adjacent optical surfaces. The separation is desirable, since in particular instances the individual optical films operate more effectively when the external optical medium (for one or more optical surfaces) has a low refractive index. Light gases (such as air) or a vacuum are good examples of very low refractive index media. The joining structure allows for the majority of the surface of the affected component optical film to behave as though the external optical medium were air, while simultaneously allowing adjacent substrates to be attached in a substantially fixed manner. This later attribute provides for a stiffer, more environmentally robust structure than is observed in stacked films lacking raised spacing structures.

The invention provides a multilayer optical film. The multilayer optical film comprises several layers (called "component films") but should have at least two component films, a first film and a second film, each of which has an upper and lower film surface. The upper film surface of the first film typically comprises a series of optical structures created upon the film surface (by embossing for example) and a plurality of raised spacing structures with which the lower surface of the second film is contacted to provide a multifilm structure wherein the optical structures of the first film are separated from the lower surface of the second film by a gap created by the raised spacing structures of the first film. In the embodiment described here, the lower surface of the first film (referred to here as the "basal film") is essentially planar so as to provide an optically flat reference level. The component films on being joined constitute a single film structure comprising at least one gap (or void or spacing) disposed between the component films.

The optical structures on the component films may be any useful optical texture including convex optical textures, concave optical textures, and prismatic optical textures. The individual component optical films may be arrayed such that the optical structures of individual component films are arranged vertically, horizontally, in any other inclination, or any combination thereof.

The raised spacing structures present in the multilayer optical film of the present invention may comprise any structure capable of separating the optical structures of a given component film from an adjacent component film layer. Raised spacing structures include post structures, beam structures, prism structures, dome structures, bead structures, flattened bead structures, wedge structures and combinations thereof. In one embodiment a component optical film comprises both at least one post structure and at least one beam structure. In one embodiment a component optical film comprises both at least one post structure which has a tapered cone-like structure. The raised spacing structures may disposed upon the film surface in either a random fashion, an ordered fashion, or a combination of random and ordered arrangements of the structures. Typically the raised spacing structures occupy between about 1 and about 50 percent, preferably between about 5 and about 25 percent, and still more preferably between about 5 and about 10 percent of the surface area of the side of the component film comprising the raised spacing structures.

From good design, stacking and rigidity considerations, the raised spacing structures have an optimum height relative to the optical structures. This optimum height is typically between about 0.1 and about 20 microns. In an alternate embodiment the height may be between about 0.1 and about 10 microns. In yet another embodiment the height may be between about 0.1 and about 5 microns. In one group of multilayer optical films of the present invention, stacking support relies upon the presence of at least one post structure among the raised spacing structures of the component films.

For processing and stacking convenience, the component films should have a thickness between about 0.006 and about 5 millimeters, preferably between 0.025 and 0.4 millimeters, and yet more preferably between 0.08 and 0.2 millimeters. Component films having thicknesses less than 0.05 millimeters (50 microns) generally lack sufficient stiffness afford multilayer optical films with adequate rigidity, and component films having thicknesses those in excess of 5 millimeters would produce multilayer optical films having aggregate thicknesses far in excess of those typically required for optical devices employing multilayer optical films.

In one aspect, the present invention provides a multilayer optical film wherein the component films possess on at least one surface of the film an uneven surface topography comprising an optical texture (for example embossed prismatic structures) and raised spacing structures. As a result of this uneven surface topology of the component films, multilayer film structures constituted by such component films contain gaps encapsulated between adjacent film layers in the multilayer optical film structure. For purposes of this disclosure, such gaps are referred to variously and interchangeably as "gaps", "spacers" or "voids". The gaps may contain air, an inert gas, a "reactive" gas, fluid vapor, fluid matter, gels or solid particulates or monoliths depending upon the device designer's choice or requirements.

Typically, the optical texture of a given component film is separated from the adjacent component film surface by a gap created by the presence of the raised spacing structures. (This condition may not be met in all cases. For instance, where the component film is an outermost component film of a multilayer optical film). With respect to the dimensions of the optical texture of the component films, the heights of replicated features of the optical texture relative to a reference level within the component film may be equal or unequal. For example, where a component film in a multilayer optical film has both a smooth surface and a surface with an uneven surface topography, the smooth surface may be taken as the reference level from which to measure the heights of the replicated features on the surface of the film having the uneven surface topology. Similarly, with respect to the dimensions of the raised spacing structures present in a component optical film, the heights of the raised spacing structures relative to a reference level within the component film may be equal or unequal. The optical structures present in the multilayer optical films of the present invention are typically characterized by an aspect ratio. For example, the aspect ratio for an optical structure comprising a periodic array of prisms may characterized by an aspect ratio which is defined as the ratio of the height of the prism divided by the width of the prism. The aspect ratio is conveniently represented as a percentage value. Typically the aspect ratio of the optical structures of the present invention are in range between about 1 and about 400 percent, preferably about 5 and about 70 percent, and still more preferably between about 10 and about 50%. Typically, where the optical structures are arrayed in a periodic manner on the film surface the period has dimensions in a range between about 15 and about 200 microns. For some applications, however, the period may have dimensions on the order of 0.01 microns.

The joining mechanism and overall structure of the multilayer optical films of the present invention must be strong enough withstand the use environments in which multilayer optical films typically operate. Furthermore, they must withstand more extreme conditions that might be encountered during shipment and storage, for example. Customarily such films are subjected to ageing tests, for example high temperature (1000 hrs at 85°C), humidity (1000 hrs at 65°C and 95% relative humidity), thermal cycling (-35°C to 85°C, 100 cycles, 1 hr dwell, 15minutes linear transition) and thermal shock (-35°C to 85°C, 32 cycles, 1 hr dwell, 20sec linear transition). In some instances it may be desirable to provide for a pressure relief mechanism within the multilayer optical film. In such instances, the gaps created by the raised spacing structures may be of the "open cell" type. Open cell type gaps result when the raised optical structures are of the "post" rather than "beam" shape. Open cell type gaps may also result when the raised optical structures have a "beam" shape but possess an irregular height relative to a reference level within the component film. For some applications it may be advantageous to provide a "closed cell" structure for gaps within the multilayer optical film. In multilayer optical films possessing a closed cell structure there is essentially no free path from interior gaps (cells) to the edge of the multilayer optical film. In multilayer optical films possessing a closed cell gaps may be used for the encapsulation of other matter, for example functional fluids.

A plano surface adjacent to another plano surface across the gap results in visible optical interference effects since slight variations in gap thickness could result in an undesirable phenomenon recognized as Newton's ring fringes. To avoid these, the gap between surfaces should be greater than the coherent length of the light source, typically no less than a few microns.

The optical structure of the component optical films may or may not be isotropic. Additionally, the raised spacing structures of the component optical films may or may not be isotropic. There is no requirement that the raised spacing structures be aligned with respect to the optical structure. However, it may be advantageous for the raised spacing structures to mimic the topology of the optical structures.

The component films of the multilayer optical films of the present invention comprise a plurality of raised spacing structures. There is no requirement that for a given component film the raised spacing structures be of the same type or design. Where more than one type of raised spacing structure is present in a component film, the raised spacing structures may have entirely different designs, dimensions, and may also have different orientations relative to the optical structures.

In one aspect, the present invention also provides a method for making a multilayer optical film. The method for making the multilayer optical film comprises:
(a) Step A: The microstructure to be replicated into the component film is provided on a tool.
(b) Step B: Replication is achieved by molding, stamping or embossing the tool texture into the film, or by applying a curable liquid resin between film and tool and then curing the resin.
(c) Step C: The component films can be joined in many ways, such as by applying adhesive to either the raised portions or planar surfaces and pressing the films together, by softening either the raised portions or the planar surfaces via exposure to liquid or vaporous solvent and then pressing the films together, or by stacking the films and vibration welding the films together. The adhesive may be a uv-curable or pressure sensitive adhesive or a combination thereof.

With respect to Step C, the joining mechanism by which the individual component films are connected may include any suitable joining technique such as ultrasonic welding, solvent welding, the use of an adhesive on the upper surfaces of the raised spacing structures, the use of an adhesive on the planar surfaces in contact with the raised spacing structures. In one embodiment of the present invention the planar surfaces of the component films are coated with a pressure sensitive adhesive and joined thereby to the raised spacing structures of adjacent film layers.

In the embodiment shown in Figure 1, a plurality of individual component films 10 possessing optical texture 25 which has prismatic structure 55 and raised spacing structures 30 have been stacked to yield a joined multilayer optical film 05. In the multilayer optical film the raised spacing structure 30, having a beam structure 50 or a post structure 45 has a height 60 which is typically in a range between about 0.1 and about 20 microns. In the multilayer optical film component film layers 10 encapsulate between them gaps 40 which may be either of an open cell type or a closed cell type which may contain air or another fluid.

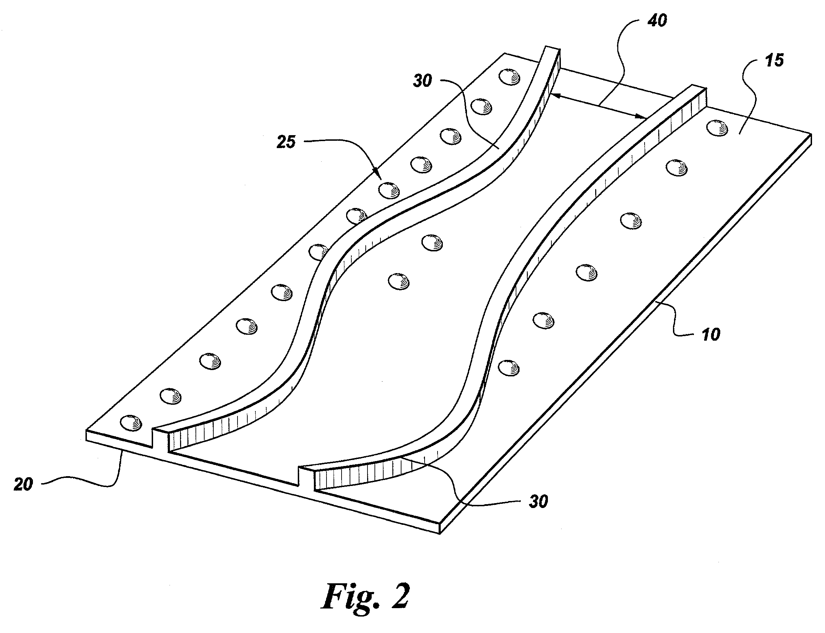

In the embodiment shown in Figure 2, the individual component film 10 has non-parallel raised spacing structures 30 disposed upon the upper surface 15 of the film. The lower, smooth surface of the film 20 may be used as a reference level by witch to judge the heights of the optical structures 25 disposed upon the upper surface 15. An open cell type gap 40 is shown between two adjacent raised spacing structures 30.

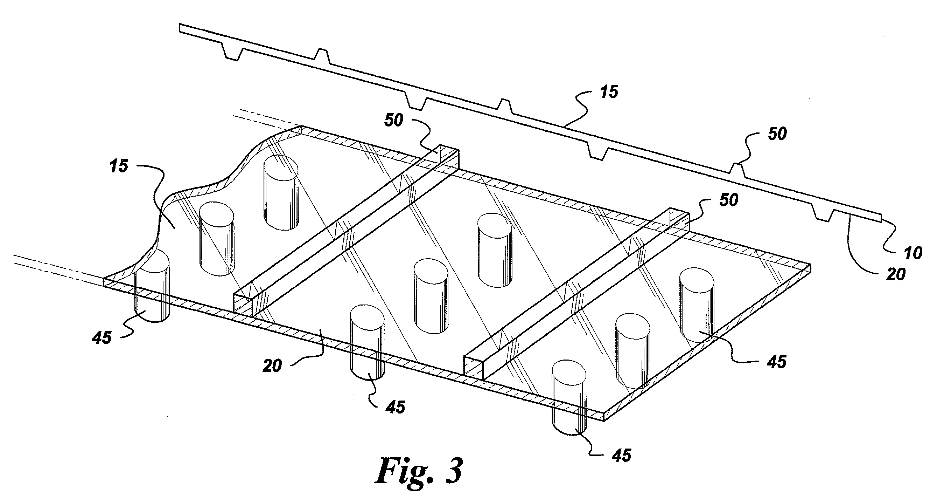

In the embodiment schematically shown in Figure 3 (end-on view and top view), the individual component film 10 is depicted with raised spacing structures 30 on the upper surface 15 having the form of parallel beams 50 and post structures 45 on the lower surface 20. Figure 3 also represents one aspect of the present invention which is an optical film, said film having raised spacing structures on both the upper and lower film surfaces and optical structures on either or both of said upper and lower surfaces.

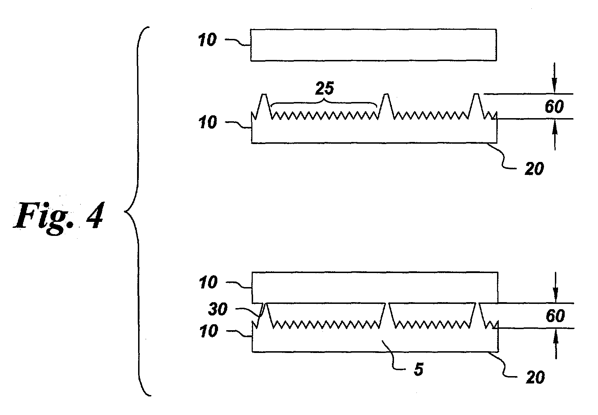

In the embodiment schematically shown in Figure 4 the individual component films 10, possessing optical texture 25 is stacked to yield a joined multifunctional or multilayer film 05. The spacer height 60 is about 0.1-20 microns. Film stacking or joining occurs at the joined structures 30.

The optical structures of the optical films of the present invention may be highly ordered or randomized film surface features, said features including prismatic shapes, lenses, and bead-like structures. In one embodiment the optical structures comprise a random rough surface transferred to the film from a "sand blasted" master.

### EXAMPLES

The following examples are set forth to provide those of ordinary skill in the art with a detailed description of how the methods claimed herein are carried out and evaluated, and are not intended to limit the scope of what the inventors regard as their invention.

### EXAMPLE 1: Method for making joined multilayer composite film

Polycarbonate film having a thickness of about 0.1 millimeter is used to prepare three films #1, #2, and #3. Film #1, the basal film, is embossed on the upper surface with a random roughened texture using a sand-blasted master and embossed on the lower surface with a series of raised spacing structures having the form of continuous parallel beams occupying about 20% of the total surface area of the lower film surface. Film #2 is prepared by embossing the polycarbonate starting film to provide a polycarbonate film having a smooth lower surface and an embossed upper surface. The structural features of the embossed surface are transferred to the polycarbonate from a metallic master to provide in the embossed upper surface an regular alternating series of prismatic structures disposed between raised ridges having essentially a flattened upper surface, said upper surface of the raised ridges having a relative height about 5 microns higher than the highest point of the prismatic structures. The embossed structures are arrayed in a single direction across the surface of the film. Film #3 is prepared in the same manner as film #2 but having a random roughened upper surface and a smooth lower surface. The smooth lower surfaces of each of films #2 and #3 is then coated with a pressure sensitive adhesive. Each of films #1-3 is cut into squares having dimensions of about 400 mm by about 400 mm. The cut squares of film are then joined together as follows. First the lower surface of film #2 is placed in contact with the upper surface of film #1 to provide a bilayer having an exposed upper layer. Then a second square cut from film #2 is contacted with the upper layer of the bilayer via the pressure sensitive adhesive coated lower surface of the second square cut from film #2 to provide a trilayer. This second square of film #2 is positioned such that the axes of the embossed structures (prisms and raised ridges) are arrayed in an approximately orthogonal manner with respect to each square of film #2 employed. Finally, a cut square of film #3 is contacted with the upper surface of the trilayer via the pressure sensitive adhesive coated lower surface of film #3 to provide a stacked structure comprising three film types arranged in a 4 layer structure. The layers are then joined by applying sufficient pressure to the stacked structure to activate the pressure sensitive adhesive and provide thereby a joined multilayer composite film.

## Claims

1. A multilayer optical film (5), said film comprising at least two component films (10), at least one of said component films having an upper (15) and lower (20) surface, said upper surface (15) comprising a series of optical structures (25) and a plurality of raised spacing structures (30), said lower surface (20) being essentially planar, said component films (10) being joined so as to constitute a single film structure (5) comprising at least one gap (40) disposed between said component films.

2. A multilayer optical film (5) according to claim 1 wherein said optical structures (25) are convex structures.

3. A multilayer optical film (5) according to claim 1 wherein said optical structures (25) are concave structures.

4. A multilayer optical film (5) according to claim 1 wherein said optical structures (25) are prisms.

5. A multilayer optical film (5) according to claim 1 wherein said raised spacing structures (30) comprise at least one post-structure (45).

6. A multilayer optical film (5) according to claim 1 wherein said raised spacing structures (30) have a height (60) relative to the optical structures (25) said height being between about 0.1 and about 20 microns.

7. A multilayer optical film (5) according to claim 1 wherein said gap (40) comprises solid matter, fluid matter and combinations thereof.

8. A multilayer optical film (5) according to claim 1 wherein the raised spacing structures (30) have equal heights (60) relative to the optical structures (30).

9. A multilayer optical film (5) according to claim 1 wherein the raised spacing structures (30) occupy an area, said area being defined as a percentage of a total area of the film surface upon which the raised spacing structures (30) are disposed, said percentage being in a range between about 1 and about 50 percent.

10. A method for making a multilayer optical film (5), said film comprising at least two component films (10), at least one of said component films (10) having an upper (15) and lower surface (20), said upper surface (15) comprising a series of optical structures (25) and a plurality of raised spacing structures (30), said lower surface (20) being essentially planar, said component films (10) being joined so as to constitute a single film structure (5,) said single film structure (5) comprising at least one gap (40) disposed between said component films (10), said method comprising making a plurality of component films (10) using at least one microstructuring tool, and joining said component films (10) to provide a multilayer optical film (5).

11. A method for making a multilayer optical film (5) according to claim 10 wherein said joining comprises applying an adhesive or solvent to either the planar surface (20), the raised spacing structures (30), or both, stacking the component films (10) to provide a stack of the component films, and applying pressure to the stack of component films to provide a multilayer optical film (5).
